# EUROPEAN PATENT APPLICATION

(11) **EP 1 715 420 A1**
(43) Date of publication of application: **25.10.2006**
(21) Application number: 05008919.2
(22) Date of filing: 22.04.2005
(51) Int. Cl.: G06F 9/445, H04M 1/725

(54) **A method and computer program for switching on a portable telephone**

(71) Applicant: SIEMENS AKTIENGESELLSCHAFT, 80333 München (DE)
(72) Inventor: Schüling, Jürgen, 46414 Rhede (DE)

(57) **Abstract**

A method for switching on a portable telephone (100) comprising at least one processor (103) and a set (A, B, C) of program means adapted to perform a set of functions (a1, a2; b1, b2, b3; c) stored into a data storage (105) comprises the steps of:
- in response to receiving a signal from an activation interface (110), selecting a predefined subset (B) of program means adapted to perform a predefined subset (b1, b2, b3) of functions, the predefined subset (B) of program means not comprising a subset (A, C) of program means adapted to operate radio communication functions of the portable telephone (100); and

loading the subset (B) of program means into work memory of the portable telephone (100) that is accessible to said processor (103), or to said processor (103).

## Description

### Field of the invention

The invention relates to a method for switching on a portable telephone comprising at least one processor and a set of program means adapted to perform a set of functions stored into data storage. Furthermore, the invention relates to a portable telephone comprising at least one processor and such a set of program means, and to a computer program.

### Background art

Portable telephones have become very versatile devices. Because of their increased capabilities, many mobile telephones now comprise a powerful processor with which they can perform many different functions in addition to telephony, including all telephony services, that is usually performed by using different radio communication functions. For example, many portable telephones now comprise an integrated camera or advanced audio functions e.g. to reproduce a stereo sound. Portable telephones may comprise at least some functions of Portable Digital Assistants, and thereby they may comprise calendar, notebook, and word processing functions.

When a portable telephone, especially a multimedia capable mobile telephone or a cordless telephone, is being switched on, it loads all functionalities to the memory. Likewise, all these functionalities are activated, e.g. the portable telephone usually logs into a network upon completing the switching on. This takes a relatively long time that may be disturbing for the user, especially if he or she would be interested in using only one application or a couple of functionalities e.g. within some applications.

### Summary of the invention

It is an objective of the invention to reduce the time needed to switch on a portable telephone.

This objective can be achieved with a method as set out in claim 1, with a portable telephone as set out in claim 8, and with a computer program as set out in claim 15.

The dependent claims describe various advantageous embodiments of the invention.

### Advantages of the invention

If a portable telephone comprising at least one processor and a set of program means, adapted to perform a set of functions and stored into a data storage, is switched on so that, i) in response to receiving a signal from an activation interface, a predefined subset of program means adapted to perform a predefined subset of functions is selected, the predefined subset of program means not comprising a subset of program means adapted to operate radio communication functions of the portable telephone, and ii) the subset of program means is loaded into a work memory of the portable telephone that is accessible to said processor, or to said processor, the switching on (or booting) of the portable telephone can be made in a shorter time. For example, the logging in into a corresponding network can be omitted if the user is willing to use only functionalities of the portable telephone not directly related to telephony functions. In this manner, the portable telephone can be operated in an energy saving manner and the user of the portable telephone can furthermore decide to be out of reach of the telephone network but still be able to use the portable telephone for other functionalities.

If said program means comprises at least one radio communication protocol stack, baseband functions, or signal processing functions to operate a radio transmitter or a radio receiver of the portable telephone, by not loading any of these not-necessarily-needed functionalities to the work memory or to said processor, the switching on can be made in a considerably shorter time.

If said activation corresponds to a user action on an activation interface of the portable telephone, it may be simpler for the user to select the faster switching on of the portable telephone.

If said user action corresponds to the user activating the activation interface in a predefined activation pattern, the conventional start block can be used. If, instead or in addition to this, said user action further comprises the user selecting at least one input means of an input portion of the portable telephone, the selecting of the predefined subset of program means being performed responsive to said selection, the input portion of the portable telephone can be used to give the user an enhanced possibility to select which kind of subset is to be loaded.

### List of Figures

In the following, the invention is described in more detail with reference to the examples in the accompanying drawings in Figures 1 to 4, of which:
Figure 1 is a schematic diagram showing some functional blocks of a portable telephone;
Figures 2A and 2B show a first and a second embodiment of user action on an activation interface of the portable telephone;
Figure 3 illustrates the data storage; and
Figure 4 is a flow diagram illustrating how the switching on can be performed.

Same reference numerals refer to similar structural elements throughout the Figures.

### Detailed description

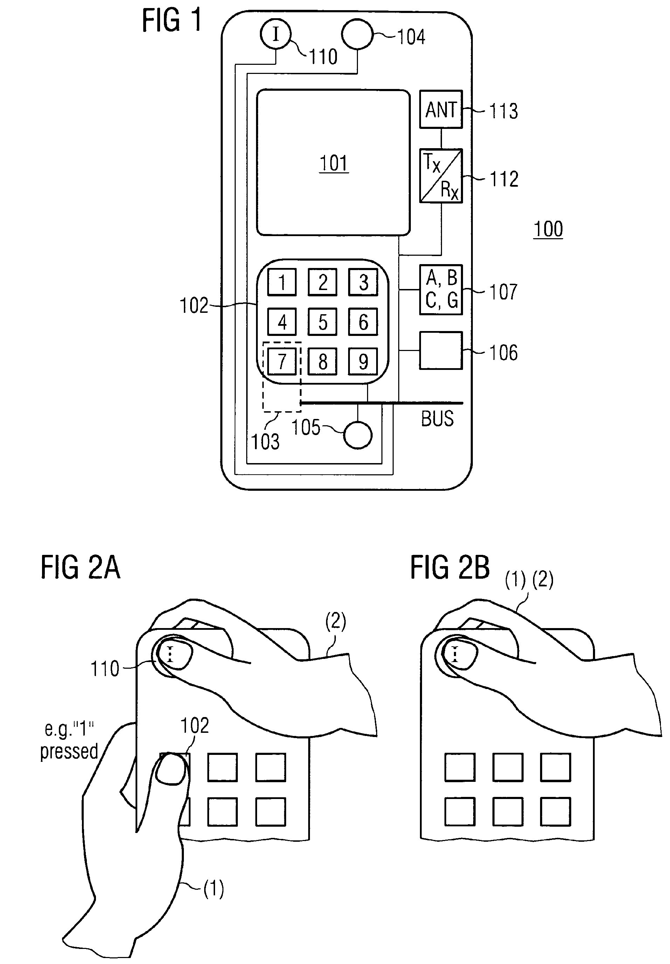

Figure 1 shows some functional blocks of a portable telephone 100. The portable telephone 100 comprises a display 101, and an input portion 102 comprising a number of input means such as a keypad comprising a number of keys. The portable telephone 100 further comprises a processor 103, a loudspeaker 104, a microphone 105, work memory 106, data storage 107, activation interface 110 such as an activation switch, radio transmitter/receiver 112, and an antenna 113.

The processor 103 controls the operation of the different functional blocks of the portable telephone 100. The functional blocks may be connected to the processor 103 by means of a messaging bus. The messaging bus carries signals between the functional blocks. A signal is generated if the activation interface 110 or input portion 102 is activated e.g. by using it. The signal may comprise information on duration of the activation. The signal may comprise information which input means have been or are activated. The signal may also result from an activation pattern, then comprising information on the activation sequence and preferably also on duration of the activations in the activation sequence. The signal can be a digital or analog signal, e.g. in the form of a voltage pulse or a sequence of voltage pulses.

If the activation interface 110 is activated normally, e.g. by depressing the activation switch, when the portable telephone 100 has been switched off, i.e. when it is in an off-state, the processor 103 detects the signal resulting from this and starts to switch on (or boot) the portable telephone 100.

Normally, the switching on comprises loading of program means A, B, C from the data storage 107 into the work memory 106 from which the processor 103 can read and execute them, or directly into the processor 103. The program means A, B, C include software means to perform all functions that are necessary for the operation of the portable telephone 100.

The portable telephone 100 can be switched on into the desired functional state by activation of the activation interface 110. The activation interface 110 may be a power switch or an "on-key".

Figure 2A show a first embodiment of the invention where the user performs an action on the activation interface 110 - now by depressing (2) the activation switch - while, before or after selecting at least one input means of the input portion 102 - now by depressing (1) a key in the keypad. The user may press one or more keys of the keypad, for example.

Figure 2B shows a second embodiment of the invention where the user performs an action on the activation interface 110 in a predefined pattern which now is a first depression (1) of the activation switch followed by a second depression of the activation switch. The predefined pattern may correspond to pressing the activation switch 110 a predefined number of times and for a predetermined duration.

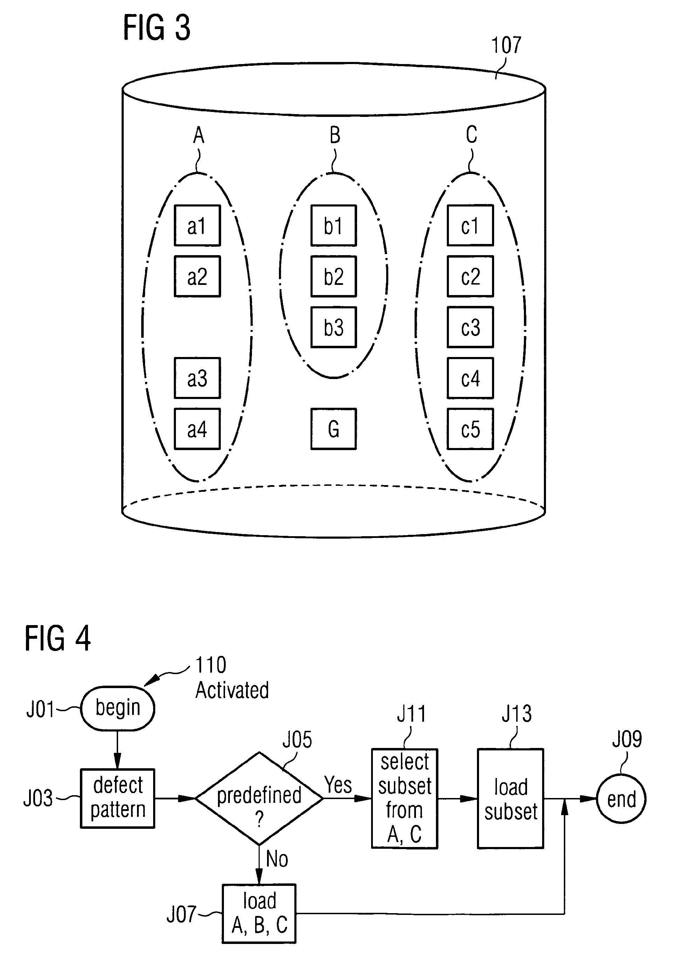

Figure 3 illustrate the data storage 107 of the portable telephone 100. The data storage 107, such as a flash RAM or a memory card, comprises, in addition to the booting module G that is always loaded into the work memory 106 or into the processor 106 when the portable telephone 100 is being switched on, also different sets A, B, C of program means adapted to perform a set of functions.

To set A belong program means a1 for at least one radio communication protocol stack and program means a2 for baseband functions.

To set C belong digital signal processing functions c1 to c5 adapted to operate the radio transmitter 112 or radio receiver 112 of the portable telephone 100.

To set B belong all other program means. Set B may be arbitrarily divided into different subsets of functions b1 to b3.

For example, by selecting a key of the keypad, the function mode of the portable telephone 100 can be selected. In this manner, the portable telephone 100 may be switched on as MP3 or audio player, as video recorder, as game terminal, or as normal portable telephone. The user can then activate the activation interface 110 to activate the portable telephone 100 in the selected functional mode.

The functionality-dependent switching on of the portable telephone 100 can be performed responsive to pattern in which the activation interface 110 is activated when the portable telephone 100 is in an off-state. The pattern can correspond to a number how many times and/or duration for how long time the activation interface 110 is activated. The Table shows an example for such patterns:

**Table**

| **Switch on mode** | **Pattern of activation at the activation interface** |
|---|---|
| full set of functionalities | once for a longer time |
| only telephony functionalities | once for a short time |
| MP3 or audio player | twice for a longer time |
| video recorder or player | once for a long time, once for a short time |
| game terminal | twice shortly |

Instead or in addition to this, the switching on can be carried out either by providing at least one activation interface 110 in the portable telephone 100 with means to carry out the double functionality. As an alternative, the input portion 102 may be adapted to enable switching on of the portable telephone 100 in a particular mode. If the input portion 102 is a keypad, this may correspond to the user pressing one or more keys before, during or shortly after activating the activation interface 110.

A further embodiment is to require entering of a Personal Identification Code, such as a Personal Identification Number PIN from the user only if the portable telephone 100 is activated in a mode in which it is possible to activate applications that may cause costs, e.g. telephony applications, i.e. when set B of program means is loaded in part or in full. In this manner the portable telephone 100 can safely be used as a game terminal, because it would not be possible to by mistake end up having a connection to the telephone network. This restriction might be meaningful especially for children.

Figure 4 is a flow diagram illustrating how the program means in the boot module G can be adapted to switch on the portable telephone 100.

After step J01, i.e. in response to detecting a signal indicating that the activation interface 110 has been activated, in step J03 the boot module G detects from the signal the pattern in which the activation interface 110 has been activated. In step J05 it is checked whether the pattern is a predefined pattern. Instead of or in addition to checking the pattern, the boot module G can also check whether a signal indicating that one or more input means, such as keys, in the input portion 102 are or have been depressed before, during, or shortly after the activation interface 110 was activated can be detected.

If the pattern does not correspond to a predefined pattern, in step J07 set A, B, C of functions is loaded, after which the starting up is completed in step J09.

If the pattern corresponds to a predefined pattern, in step J11 the subset from A, C is selected responsive to the pattern. In step J13 the selected subset from A, C is loaded into the work memory 106 or into the processor 103, after which the starting up is completed in step J09.

Even though the invention was described by way of examples, the skilled person appreciates that it is not limited to these but can be modified within the scope and spirit of the accompanying patent claims.

## Claims

1. A method for switching on a portable telephone (100) comprising at least one processor (103) and a set (A, B, C) of program means adapted to perform a set of functions (a1, a2; b1, b2, b3; c) stored into a data storage (105), the method comprising the steps of:
- in response to receiving a signal from an activation interface (110), selecting a predefined subset (B) of program means adapted to perform a predefined subset (b1, b2, b3) of functions, the predefined subset (B) of program means not comprising a subset (A, C) of program means adapted to operate radio communication functions of the portable telephone (100); and
- loading the subset (B) of program means into work memory of the portable telephone (100) that is accessible to said processor (103), or to said processor (103).

2. A method according to claim 1, wherein: said program means comprise at least one radio communication protocol stack.

3. A method according to claim 1 or 2, wherein: said program means comprise baseband functions.

4. A method according to any one of claims 1 to 3, wherein: said program means comprise digital signal processing functions to operate a radio transmitter (112) or a radio receiver (112) of the portable telephone (100).

5. A method according to any one of the preceding claims, wherein: said activation comprises a user action on the activation interface (110) of the portable telephone (100).

6. A method according to claim 5, wherein: said user action comprises the user activating the activation interface (112) in a predefined activation pattern, the step of selecting the predefined subset being performed responsive to said pattern.

7. A method according to claim 5 or 6, wherein: said user action further comprises the user selecting at least one input means of an input portion (102) of the portable telephone (100), and wherein: the selecting of the predefined subset (B) of program means is performed responsive to said selection.

8. A portable telephone (100) comprising at least one processor (103) and a set (A, B, C) of program means adapted to perform a set of functions (a1, a2; b1, b2, b3; c1-c5) stored into a data storage (107), the portable telephone (100) further comprising:
- means (G, 103) adapted, in response to receiving a signal from an activation interface (110), to select a predefined subset (B) of program means adapted to perform a predefined subset (b1, b2, b3) of functions, the predefined subset (B) of program means not comprising a subset (A, C) of program means adapted to operate radio communication functions of the portable telephone (100); and
- means (G, 103) adapted to load the subset (B) of program means into a work memory of the portable telephone (100) that is accessible to said processor (103), or to said processor (103).

9. A portable telephone (100) according to claim 8, wherein: said program means (A) comprise at least one radio communication protocol stack.

10. A portable telephone (100) according to claim 8 or 9, wherein: said program means (A) comprise baseband functions.

11. A portable telephone (100) according to any one of claims 8 to 10, wherein: said program means (C) comprise digital signal processing functions adapted to operate a radio transmitter (112) or a radio receiver (112) of the portable telephone (100).

12. A portable telephone (100) according to any one of the preceding claims 8 to 11, wherein: said activation interface (110) is adapted to generate said signal in response to a user action.

13. A portable telephone (100) according to claim 12, wherein: said user action comprises the user activating the activation interface (110) of the portable telephone (100) in a predefined pattern.

14. A portable telephone (100) according to claim 12 or 13, wherein: said means (G, 103) are adapted to perform the selection of the predefined subset (B) in response to receiving a further signal from at least one input means of an input portion (102) of the portable telephone (100).

15. A computer program (G), comprising program means adapted to perform the method steps according to any one of the preceding claims 1 to 7, when executed in a processor (103) .
